# EUROPÄISCHE PATENTSCHRIFT

(11) **EP 2 240 821 B1**
(45) Veröffentlichungstag und Bekanntmachung des Hinweises auf die Patenterteilung: **31.08.2016**
(21) Anmeldenummer: 09706913.2
(22) Anmeldetag: 26.01.2009
(51) Int. Cl.: G02F 1/1335

(54) **ANZEIGEVORRICHTUNG**
DISPLAY DEVICE
DISPOSITIF D'AFFICHAGE

(30) Priorität: 31.01.2008 DE 102008006990
(43) Veröffentlichungstag der Anmeldung: 20.10.2010
(73) Patentinhaber: OSRAM Opto Semiconductors GmbH, 93055 Regensburg (DE)
(72) Erfinder: WINTER, Matthias, 112 TAIPEI (TW); KROMOTIS, Patrick, 93051 Regensburg (DE)
(74) Vertreter: Epping - Hermann - Fischer
(86) Internationale Anmeldenummer: PCT/DE2009/000102
(87) Internationale Veröffentlichungsnummer: WO 2009/094993

(56) Entgegenhaltungen:
- EP-A- 1 566 848
- EP-A2- 1 521 235
- US-A1- 2006 038 770
- US-B1- 6 351 069

## Beschreibung

### Anzeigevorrichtung

Die Erfindung betrifft eine Anzeigevorrichtung. Weiter betrifft die Erfindung eine Hintergrundbeleuchtungseinheit für eine Hintergrundbeleuchtung eines Bildschirms. Ferner betrifft die Erfindung eine Bildschirmeinheit des Bildschirms.

Als Hintergrundbeleuchtung für eine Anzeigevorrichtung, wie zum Beispiel einen Monitor oder einen Bildschirm, beispielsweise einen LCD-Bildschirm, werden regelmäßig Kaltkathodenröhren verwendet, die weißes Licht abstrahlen. Bei diesen Kaltkathodenröhren entsteht das Licht durch eine kalte Entladung von Quecksilber und Gasen. Zur Farbdarstellung auf dem Bildschirm wird das Licht der Hintergrundbeleuchtung durch Farbfilter gefiltert.

Die Druckschrift EP 1 566 848 A beschreibt eine Anzeigevorrichtung.

Die Aufgabe, die der Erfindung zugrunde liegt, ist, eine Anzeigevorrichtung zu schaffen, die einfach und günstig eine besonders gute Bilddarstellung ermöglichen.

Die Aufgabe wird durch eine Anzeigevorrichtung gemäß Anspruch 1 gelöst.

Gemäß einem ersten Aspekt einer Ausgestaltung der Erfindung ist eine Hintergrundbeleuchtungseinheit für eine Hintergrundbeleuchtung einer Anzeigevorrichtung, insbesondere eines Bildschirms oder einer Bildschirmeinheit, vorgesehen.

Der Ausdruck "Bildschirm" ist dabei nicht auf den Bildschirm eines Monitors oder eines TV-Geräts beschränkt. Es kann sich zum Beispiel auch um eine großflächige Anzeigevorrichtung handeln, die einen Flächeninhalt von 10 m² oder mehr aufweist.

Die Hintergrundbeleuchtungseinheit hat eine blaues Licht emittierende Leuchtdiode und grün und rot emittierende Phosphore, die so angeordnet und ausgebildet sind, dass das blaue Licht der Leuchtdiode die grün und rot emittierenden Phosphore anregt.

Dies ermöglicht besonders einfach und günstig eine besonders gute Darstellung mittels des Bildschirms, da pro Bildpunkt des Bildschirms lediglich eine Leuchtdiode vorgesehen sein muss und da ein besonders breites Farbspektrum darstellbar ist.

Gemäß einem zweiten Aspekt einer Ausgestaltung der Erfindung ist die Hintergrundbeleuchtungseinheit für die Hintergrundbeleuchtung der Anzeigevorrichtung, zum Beispiel des Bildschirms, vorgesehen. Die Hintergrundbeleuchtungseinheit hat die blaues Licht emittierende Leuchtdiode und grün und gelb emittierende Phosphore, die so angeordnet und ausgebildet sind, dass das blaue Licht der Leuchtdiode die grün und gelb emittierenden Phosphore anregt. Dies ermöglicht besonders einfach und günstig eine besonders gute Bilddarstellung mittels des Bildschirms, da pro Bildpunkt des Bildschirms lediglich die eine Leuchtdiode vorgesehen sein muss und da ein besonders breites Farbspektrum darstellbar ist.

Die grünes Licht emittierenden Phosphore sind beispielsweise aus der Gruppe der seltenerd-dotierten Granate, Silikate, Scandanate, Thiogallate und/oder Oxynitride. Die rotes Licht emittierenden Phosphore sind beispielsweise aus der Gruppe der seltenerd-dotierten Silikate, Oxynitride, Nitride, Sulfide.

Gemäß einem dritten Aspekt einer Ausgestaltung der Erfindung ist eine Bildschirmeinheit des Bildschirms vorgesehen. Die Bildschirmeinheit umfasst die Hintergrundbeleuchtungseinheit. Ferner umfasst die Bildschirmeinheit einen
Polarisationsfilter, der in einer Abstrahlrichtung der Hintergrundbeleuchtungseinheit angeordnet ist und der die Hintergrundbeleuchtungseinheit zumindest teilweise überdeckt. Eine Flüssigkristallschicht ist auf der von der Hintergrundbeleuchtungseinheit abgewandten Seite des Polarisationsfilters angeordnet. Eine Filteranordnung umfasst zumindest einen Farbfilter und ist auf der von der Hintergrundbeleuchtungseinheit abgewandten Seite der Flüssigkristallschicht angeordnet.

Gemäß einem vierten Aspekt wird eine Anzeigevorrichtung, insbesondere eine Bildschirmeinheit eines Bildschirms angegeben, mit
- einer Hintergrundbeleuchtungseinheit für eine Hintergrundbeleuchtung des Bildschirms,
- einem Polarisationsfilter, der in einer Abstrahlrichtung der Hintergrundbeleuchtungseinheit angeordnet ist und der die Hintergrundbeleuchtungseinheit zumindest teilweise überdeckt,
- einer Flüssigkristallschicht, die auf der von der Hintergrundbeleuchtungseinheit abgewandten Seite des Polarisationsfilters angeordnet ist, und
- einer Filteranordnung, die zumindest einen Farbfilter umfasst und die auf der von der Hintergrundbeleuchtungseinheit abgewandten Seite der Flüssigkristallschicht angeordnet ist, wobei
- die Hintergrundbeleuchtungseinheit eine blaues Licht emittierende Leuchtdiode umfasst, und wobei
- der blaues Licht emittierenden Leuchtdiode zumindest zwei unterschiedliche Phosphoren nachgeordnet sind, die das blaue Licht der Leuchtdiode absorbieren und Licht voneinander unterschiedlicher Farbe re-emittieren, das sich mit dem blauen Licht der Leuchtdiode (22) zu weißem Licht mischt.

In einer Ausgestaltung sind die Phosphore der Hintergrundbeleuchtungseinheit so ausgebildet, dass Spektralkurven der Phosphore einen möglichst großen Überlappungsbereich mit den Transmissionskurven des Farbfilters aufweisen. Dies trägt besonders wirkungsvoll zu der besonders guten Darstellung mittels des Bildschirms bei.

In einer weiteren Ausgestaltung weist die Bildschirmeinheit für jeden Bildpunkt der Bildschirmeinheit jeweils drei unterschiedliche Farbfilter und Leuchtdioden lediglich eine Hintergrundbeleuchtungseinheit auf. Dies ermöglicht besonders einfach die einfache und günstige Ausgestaltung der Bildschirmeinheit.

Ausführungsbeispiele der Erfindung sind im Folgenden anhand von schematischen Zeichnungen näher erläutert.

Es zeigen:
- Figur 1: einen Monitor,
- Figur 2: einen Querschnitt durch einen Bildpunkt einer Bildschirmeinheit des Monitors,
- Figur 3: Transmissionskurven der Farbfilter und der Hintergrundbeleuchtungseinheit.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

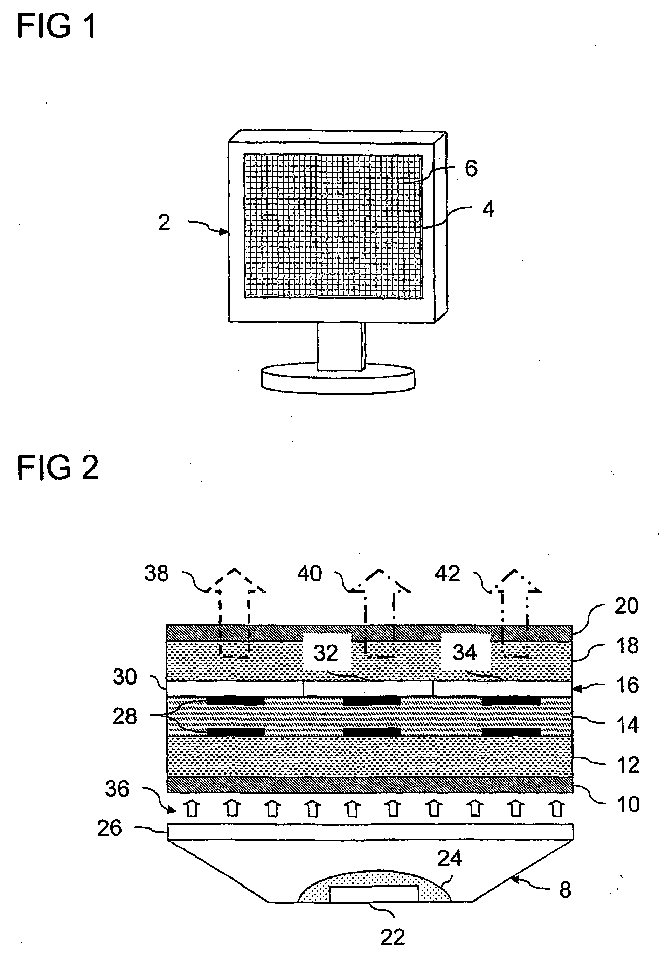

Ein Monitor 2 (Figur 1) umfasst einen Bildschirm 4. Der Bildschirm 4 kann einstückig hergestellt sein und lediglich eine Bildschirmeinheit 6 umfassen. Alternativ dazu kann der Bildschirm mehrstückig hergestellt sein und mehrere Bildschirmeinheiten 6 umfassen. Je eine der Bildschirmeinheiten 6 umfasst einen oder mehrere Bildpunkte des Bildschirms 4. Der Monitor 2 ist beispielsweise ein LCD-Monitor oder ein LCD-Fernseher.

Je ein Bildpunkt des Bildschirms 4 (Figur 2) umfasst eine Hintergrundbeleuchtungseinheit 8, einen ersten Polarisationsfilter 10, eine erste Glasplatte 12, eine Flüssigkristallschicht 14, eine Filterschicht 16, eine zweite Glasplatte 18 und einen zweiten Polarisationsfilter 20.

Die Hintergrundbeleuchtungseinheit 8 umfasst eine blaues Licht emittierende Leuchtdiode 22. Die blaues Licht emittierende Leuchtdiode 22 ist in einer Vergussmasse 24 eingebettet. Die Vergussmasse 24 umfasst Phosphore. Die Phosphore werden durch das blaue Licht der Leuchtdiode 22 angeregt. Die angeregten Phosphore emittieren teilweise grünes und teilweise rotes Licht. Alternativ dazu emittieren die Phosphore grünes und gelbes Licht. Das bedeutet in diesem Zusammenhang, dass zumindest zwei unterschiedliche Arten von Phosphoren in der Vergussmasse 24 eingebettet sind und dass diese jeweils anders farbiges Licht emittieren. Die Leuchtdiode 22 und die Phosphore sind so ausgebildet und angeordnet, dass sich das blaue Licht der Leuchtdiode 22 und das grüne und rote oder grüne und gelbe Licht der Phosphore zu weißem Licht 36 mischt, das dann von der Hintergrundbeleuchtungseinheit 8 abgestrahlt wird.

Die Hintergrundbeleuchtungseinheit 8 kann eine Abdeckung 26 aufweisen. In Abstrahlrichtung der Hintergrundbeleuchtungseinheit folgt auf die Abdeckung 26 der ersten Polarisationsfilter 10. Der erste Polarisationsfilter 10 ist vorgesehen zum Filtern des von der Leuchtdiode 22 abgestrahlten Lichts. Das polarisierte Licht durchdringt die erste Glasplatte 12, die zusammen mit der zweiten Glasplatte 18 die Flüssigkristallschicht 14 und die Filterschicht 16 einbettet. Die Flüssigkristallschicht 14 ist mit Elektroden 28 gekoppelt. Abhängig von einer Spannung, die an den Elektroden 28 anliegt, werden die Kristalle der Flüssigkristallschicht 14 zwischen den entsprechenden Elektroden ausgerichtet, so dass davon abhängig das von der Hintergrundbeleuchtung 8 abgestrahlte Licht nahezu ungehindert die Flüssigkristallschicht 14 passieren kann oder entsprechend abgeschwächt wird.

Die Filterschicht 16 weist vorzugsweise einen blauen Filter 30, einen grünen Filter 32 und einen roten Filter 34 auf. Abhängig von der Spannung an den Elektroden wird somit in Abstrahlungsrichtung hinter dem entsprechenden Filter unterschiedlich starkes blaues, grünes oder rotes Licht 38, 40, 42 durchgelassen. Das blaue, grüne und rote Licht 38, 40 42 kann somit abhängig von der Spannung an den entsprechenden Elektroden unterschiedlich gemischt werden, was das Darstellen einer breiten Farbpalette ermöglicht. Die zweite Glasplatte kann mit dem zweiten Polarisationsfilter 20 abgedeckt sein.

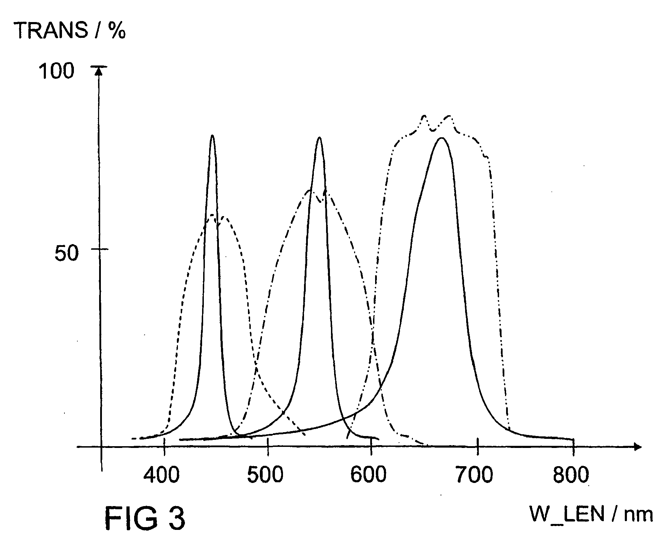

Die Phosphore in der Vergussmasse 24 sind vorzugsweise so gewählt, dass das jeweils von ihnen abgestrahlte Lichtspektrum einen möglichst großen Überlappungsbereich mit Transmissionskurven (Figur 3) der Farbfilter aufweist. Beispielsweise wird in Figur 3 die Transmissionskurve des blauen Filters 30 durch eine gestrichelte Linie dargestellt, die des grünen Filters 32 eine Strichpunkt-Linie und die des roten Filters 24 eine Strich-Doppelpunkt-Linie. Die Spektren des abgestrahlten Lichts der blaues Licht emittierenden Leuchtdiode 22 und der Phosphore liegen mittig in den entsprechenden Transmissionskurven der Farbfilter. Vorzugsweise weist die von den Spektralkurven der Phosphore und der Leuchtdiode 22 eingeschlossene Fläche einen möglichst großen Überlappungsbereich mit den entsprechenden von den Transmissionskurven eingeschlossenen Flächen auf. Dies ermöglicht eine besonders gute Lichtausbeute und eine besonders gute Bilddarstellung in einem besonders großen Farbbereich. Dies trägt zu einer besonders guten Darstellung eines Bildes mittels des Monitors 2 bei. Ferner ist die Verwendung der Leuchtdiode 22 mit den Phosphoren für die Hintergrundbeleuchtung 8 besonders einfach und günstig, da für jeden Bildpunkt lediglich eine Leuchtdiode angesteuert werden muss. Ferner können die Phosphore individuell auf unterschiedliche Farbfilter ängepasst werden. "Möglichst groß" kann dabei heißen, dass die eingeschlossenen Flächen einen Überlappbereich aufweisen, der einen Flächeninhalt von wenigstens 50 % des Gesamtflächeninhalts der von den beiden Spektralkurven eingeschlossenen Flächen aufweist. Bevorzugt beträgt der Anteil wenigstens 75 % des Gesamtflächeninhalts.

## Patentansprüche

1. Anzeigevorrichtung, insbesondere Bildschirmeinheit (6) eines Bildschirms (4), mit
- zumindest einer Hintergrundbeleuchtungseinheit (8) für eine Hintergrundbeleuchtung des Bildschirms (4),
- einem Polarisationsfilter (10), der in einer Abstrahlrichtung der Hintergrundbeleuchtungseinheit (8) angeordnet ist und der die Hintergrundbeleuchtungseinheit (8) zumindest teilweise überdeckt,
- einer Flüssigkristallschicht (14), die auf der von der Hintergrundbeleuchtungseinheit (8) abgewandten Seite des Polarisationsfilters (10) angeordnet ist, und
- einer Filteranordnung (16), die zumindest einen Farbfilter umfasst und die auf der von der Hintergrundbeleuchtungseinheit (8) abgewandten Seite der Flüssigkristallschicht (14) angeordnet ist, wobei
- die Hintergrundbeleuchtungseinheit (8) eine blaues Licht emittierende Leuchtdiode (22) umfasst, und wobei
- der blaues Licht emittierenden Leuchtdiode (22) in ihrer Abstrahlrichtung zumindest zwei unterschiedliche Phosphore nachgeordnet sind, die das blaue Licht der Leuchtdiode (22) absorbieren und Licht voneinander unterschiedlicher Farbe re-emittieren, das sich mit dem blauen Licht der Leuchtdiode (22) zu weißem Licht (36) mischt, und
- die blaues Licht emittierende Leuchtdiode (22) in einer Vergussmasse (24) eingebettet ist, welche die Phosphore umfasst, **dadurch gekennzeichnet, dass**
- die Phosphore der Hintergrundbeleuchtungseinheit (8) so ausgebildet sind, dass Spektralkurven der Phosphore einen Überlappungsbereich von wenigstens 50% des Gesamtflächeninhalts der von den Spektralkurven der Phosphore eingeschlossenen Fläche mit den Transmissionskurven des Farbfilters aufweisen.

2. Anzeigevorrichtung nach dem vorherigen Anspruch,
bei der der blaues Licht emittierenden Leuchtdiode (22) grün und rot re-emittierende Phosphore nachgeordnet sind.

3. Anzeigevorrichtung nach Anspruch 1,
bei der der blaues Licht emittierenden Leuchtdiode (22) grün und gelb re-emittierende Phosphore nachgeordnet sind.

4. Anzeigevorrichtung nach Anspruch 1,
bei der der blaues Licht emittierenden Leuchtdiode (22) grün, rot und gelb re-emittierende Phosphore nachgeordnet sind.

5. Anzeigevorrichtung nach einem der vorherigen Ansprüche mit
- einer Vielzahl von Bildpunkten, wobei
- jeder Bildpunkt der Bildschirmeinheit (6) jeweils drei unterschiedliche Farbfilter und lediglich eine einzige Hintergrundbeleuchtungseinheit (8) aufweist.

6. Anzeigevorrichtung nach einem der vorherigen Ansprüche mit
- einer Vielzahl von Bildpunkten, wobei
- jedem Bildpunkt eine blaues Licht emittierende Leuchtdiode (22) eineindeutig zugeordnet ist.

## Claims

1. Display device, in particular screen unit (6) of a screen (4), comprising
- at least one backlighting unit (8) for a backlighting of the screen (4),
- a polarization filter (10), which is arranged in an emission direction of the backlighting unit (8) and which at least partly covers the backlighting unit (8),
- a liquid crystal layer (14), which is arranged on that side of the polarization filter (10) which faces away from the backlighting unit (8), and
- a filter arrangement (16), which comprises at least one colour filter and which is arranged on that side of the liquid crystal layer (14) which faces away from the backlighting unit (8), wherein
- the backlighting unit (8) comprises a light-emitting diode (22) that emits blue light, and wherein
- at least two different phosphors are disposed downstream of the light-emitting diode (22) that emits blue light in its emission direction, which phosphors absorb the blue light of the light-emitting diode (22) and re-emit light of mutually different colours which mixes with the blue light of the light-emitting diode (22) to form white light (36), and
- the light-emitting diode (22) that emits blue light is embedded in a potting compound (24) comprising the phosphors, **characterized in that**
- the phosphors of the backlighting unit (8) are embodied such that spectral curves of the phosphors have an overlap region of at least 50% of the total area content of the area enclosed by the spectral curves of the phosphors with the transmission curves of the colour filter.

2. Display device according to the preceding claim,
wherein phosphors that re-emit green and red are disposed downstream of the light-emitting diode (22) that emits blue light.

3. Display device according to Claim 1,
wherein phosphors that re-emit green and yellow are disposed downstream of the light-emitting diode (22) that emits blue light.

4. Display device according to Claim 1,
wherein phosphors that re-emit green, red and yellow are disposed downstream of the light-emitting diode (22) that emits blue light.

5. Display device according to any of the preceding claims comprising
- a multiplicity of pixels, wherein
- each pixel of the screen unit (6) has in each case three different colour filters and only a single backlighting unit (8).

6. Display device according to any of the preceding claims comprising
- a multiplicity of pixels, wherein
- a light-emitting diode (22) that emits blue light is assigned one-to-one to each pixel.

## Revendications

1. Dispositif d'affichage, en particulier console de visualisation (6) d'un écran (4), comprenant
- au moins une unité de rétroéclairage (8) pour un rétroéclairage de l'écran (4),
- un filtre polarisant (10), qui est disposé dans une direction de rayonnement de l'unité de rétroéclairage (8), et qui au moins partiellement recouvre l'unité de rétroéclairage (8),
- une couche de cristaux liquides (14), qui est disposée sur le côté du filtre polarisant (10) opposé à l'unité de rétroéclairage (8), et
- un dispositif de filtrage (16), qui comprend au moins un filtre coloré, et qui est disposé sur le côté de la couche de cristaux liquides (14) opposé à l'unité de rétroéclairage (8),
dans lequel
- l'unité de rétroéclairage (8) comprend une diode électroluminescente (22) émettant une lumière bleue, et
- la diode électroluminescente (22) émettant une lumière bleue est, dans sa direction de rayonnement, suivie par au moins deux luminophores différents, qui absorbent la lumière bleue de la diode électroluminescente (22), et qui émettent des lumières ayant des couleurs différentes l'une de l'autre, et qui se mélangent à la lumière bleue de la diode électroluminescente (22) pour donner une lumière blanche (36),
et
- la diode électroluminescente (22) émettant une lumière bleue est incorporée dans une masse de remplissage (24), qui comprend les luminophores, **caractérisé en ce que**
- les luminophores de l'unité de rétroéclairage (8) sont conçus de telle sorte que les courbes spectrales des luminophores présentent avec les courbes de transmission du filtre coloré une zone de chevauchement d'au moins 50 % de l'aire totale de la surface entourée par les courbes spectrales des luminophores.

2. Dispositif d'affichage selon la revendication précédente, **caractérisé en ce que** la diode électroluminescente (22) émettant une lumière bleue est suivie de luminophores réémettant dans le vert et dans le rouge.

3. Dispositif d'affichage selon la revendication 1, **caractérisé en ce que** la diode électroluminescente (22) émettant une lumière bleue est suivie de luminophores réémettant dans le vert et dans le jaune.

4. Dispositif d'affichage selon la revendication 1, dans lequel la diode électroluminescente (22) émettant une lumière bleue est suivie de luminophores réémettant dans le vert, dans le rouge et dans le jaune.

5. Dispositif d'affichage selon l'une des revendications précédentes, comprenant :
- un grand nombre de points images, où
- chaque point image de la console de visualisation (6) comprend trois filtres colorés différents et seulement une unité unique de rétroéclairage (8).

6. Dispositif d'affichage selon l'une des revendications précédentes, comprenant
- un grand nombre de poins images, où
- à chaque point image est affectée d'une manière non ambiguë une diode électroluminescente (22) émettant une lumière bleue.
